# EUROPEAN PATENT SPECIFICATION

(11) **EP 4 520 476 B1**
(45) Date of publication and mention of the grant of the patent: **13.05.2026**
(21) Application number: 24197036.7
(22) Date of filing: 28.08.2024
(51) Int. Cl.: B23Q 16/02

(54) **DOUBLE ROTATION INDEXING DEVICE**
INDEXIERVORRICHTUNG MIT DOPPELTEM DREHTISCH
DISPOSITIF D'INDEXAGE AVEC DOUBLE TABLE ROTATIVE

(30) Priority: 06.09.2023 JP 2023144078
(43) Date of publication of application: 12.03.2025
(73) Proprietor: Tsudakoma Kogyo Kabushiki Kaisha, Kanazawa-shi, Ishikawa-ken 921-8650 (JP)
(72) Inventor: DETO, Ryota, Kanazawa-shi, 921-8650 (JP)
(74) Representative: Zimmermann & Partner Patentanwälte mbB

(56) References cited:
- EP-A2- 1 182 379
- JP-A- 2002 066 877
- JP-A- 2021 000 707
- US-A1- 2002 094 900

## Description

### TECHNICAL FIELD

The present invention relates to a double rotation indexing device including two sets of rotation indexing units in which each of the rotation indexing units includes a main shaft rotatably supported in a frame and having one end side to which a rotation target member is attached and a drive transmission mechanism configured to transmit rotation of an output shaft of a drive motor to the main shaft, the drive transmission mechanism includes a drive shaft that is rotationally driven by the drive motor, a disk-shaped driven member attached to the main shaft, and a drive member provided on the drive shaft and having a spiral groove formed to engage directly or indirectly with the driven member, the drive shaft is supported on one end side by the frame via a bearing holder having a built-in thrust bearing and is supported on the other end side by the frame via a radial bearing, the drive shafts of both the rotation indexing units are connected by a connecting member, and the drive motor is connected to an end portion, on an opposite side to the connecting member side, of the drive shaft of one rotation indexing unit.

### BACKGROUND ART

In the field of machine tools, a so-called multiple rotation indexing device is known which includes a plurality of sets of rotation indexing units for indexing an angular position of a workpiece. In the multiple rotation indexing device, the rotation indexing unit includes a main shaft rotatably supported in a frame and a drive transmission mechanism for transmitting rotation of an output shaft of a drive motor to the main shaft.

In the rotation indexing unit, the main shaft is configured so that a rotation target member (for example, a table on which the workpiece is fixed) is attached to one end side of the main shaft. In addition, the drive transmission mechanism is configured to include a drive shaft that is rotationally driven by the drive motor, a disk-shaped driven member attached to the main shaft, and a drive member provided on the drive shaft and having a spiral groove that engages directly or indirectly with the driven member. As an example of the multiple rotation indexing device having a plurality of such rotation indexing units, there is a device disclosed in Patent Literature 1.

As for the multiple rotation indexing device disclosed in Patent Literature 1, which forms the basis for the preamble of claim 1, specifically, in each rotation indexing unit of the multiple rotation indexing device, the drive transmission mechanism is configured as a worm gear mechanism including a worm shaft as the drive shaft that is rotationally driven by the drive motor, a worm as the drive member provided on the worm shaft, and a worm wheel as the driven member attached to the main shaft. As is well known, the worm gear mechanism is configured so that the worm wheel directly (meshes) engages with a worm groove formed in a spiral shape on an outer periphery of the worm.

In addition, in the drive transmission mechanism of the rotation indexing unit, the worm shaft is supported with respect to the frame via a bearing. However, support on one end side of the worm shaft is made via a ball bearing as a thrust bearing, and support on the other end side is made via a roller bearing as a radial bearing. That is, in supporting the drive shaft (worm shaft) in the drive transmission mechanism (worm gear mechanism) as described above, a thrust bearing (ball bearing) that can receive a load in an axis line direction (thrust direction) of the drive shaft is adopted for support on one end side so that a position of the drive member (worm) does not change in the axis line direction under a reaction force from the driven member (worm wheel).

In addition, as in the multiple rotation indexing device of Patent Literature 1, support on one end side by the thrust bearing is made in such a form that a bearing holder (bearing housing) having a built-in thrust bearing is attached to the frame. Specifically, in the drive transmission mechanism, the position of the drive member in the axis line direction needs to be a desired position where engagement with the driven member is properly made. Therefore, when mounting the drive shaft, on which the drive member is provided, to the frame, it is necessary to perform the mounting along with position adjustment (alignment) of the drive shaft so that the position of the drive member in the axis line direction becomes a desired position.

Note that since the radial bearing used for support on the other end side is a bearing specialized for receiving a load in a radial direction, the radial bearing is generally provided in a state in which displacement in the axis line direction is allowed with respect to the frame. On the other hand, since the thrust bearing used for support on one end side is a bearing for receiving a load in a thrust direction in addition to the load in the radial direction, the thrust bearing is provided in a state in which displacement in the axis line direction is not allowed with respect to the frame (in a state in which the position in the axis line direction is fixed with respect to the frame). Therefore, in the configuration in which the thrust bearing is mounted directly to the frame, the position is fixed at the time of mounting, and the position of the drive shaft with respect to the frame is also fixed along with it, so it becomes difficult to perform the position adjustment in the axis line direction at the time of mounting.

Therefore, in the drive transmission mechanism as described above, it is general that the thrust bearing is used for support on one end side as described above and that the thrust bearing is provided in such a form that the bearing holder having a built-in thrust bearing is attached to the frame in order to easily perform the position adjustment of the drive shaft with respect to the frame at the time of mounting of the drive shaft.

In the multiple rotation indexing device of the related art, the respective rotation indexing units are incorporated into the device in such a form that directions of the drive shafts (positional relationship with respect to the drive members on one end side and the other end side of the drive shafts in the axis line direction) are made to be the same. Accordingly, in the two sets of rotation indexing units adjacent to each other in the axis line direction, the one end side of the drive shaft in one rotation indexing unit faces the other end side of the drive shaft in the other rotation indexing unit. In addition, in such a multiple rotation indexing device, the one end side of one drive shaft and the other end side of the other drive shaft in the facing state as described above are connected by a connecting member, so that the drive shafts in the respective rotation indexing units are connected to each other.

In addition, in such a multiple rotation indexing device of the related art, generally, the drive motor is provided in the form of being connected to one end portion, on an opposite side to a connecting (connecting member) side, of the drive shaft located on an outer side in the axis line direction in the state in which the plurality of drive shafts are connected as described above. The drive motor is provided in such a connected form, so that in the multiple rotation indexing device of the related art, an increase in size of the rotation indexing device itself or a machine tool on which the rotation indexing device is installed is avoided.

### CITATION LIST

### PATENT LITERATURE

Patent Literature 1: JP2002-066877A

However, in the multiple rotation indexing device of the related art as described above, there is a problem in that an interval in the axis line direction between two sets of rotation indexing units adjacent to each other in the axis line direction increases, which increases a size of the rotation indexing device itself. The details are as follows.

As described above, in the multiple rotation indexing device of the related art, the two sets of rotation indexing units adj acent to each other in the axis line direction are configured such that the one end side of the drive shaft in one rotation indexing unit and the other end side of the drive shaft in the other rotation indexing unit are connected to each other by the connecting member. Therefore, in the configuration, the connecting positions of the drive shafts of the two sets of rotation indexing units naturally are present between both the rotation indexing units, and the thrust bearing supporting the one end side of the drive shaft of one rotation indexing unit is present on the drive member side (in the one rotation indexing unit) with respect to the connection position.

Note that the thrust bearing used for support on the one end side is, as described above, built in the bearing holder and attached to the frame via the bearing holder. In addition, the thrust bearing generally has an outer diameter larger than that of the radial bearing used for support on the other end side. For this reason, the bearing holder having the built-in thrust bearing inevitably has a large outer diameter. Accordingly, in the configuration of the multiple rotation indexing device, the bearing holder with a large diameter as described above is present at a position on the drive shaft of each rotation indexing unit.

As for the position of the bearing holder on the drive shaft, in each rotation indexing unit, there is a disk-shaped driven member with a large outer diameter in a form of engaging with the drive member provided on the drive shaft. For this reason, the position of the above-described large-diameter bearing holder on the drive shaft should be set such that since the bearing holder interferes with the driven member at a position closer to the drive member, the bearing holder is located at a position away from the drive member where such interference does not occur. That is, support on the one end side of the drive shaft is made at a position spaced apart from the drive member compared to the other end side.

In addition, the drive shaft in the one rotation indexing unit is connected on the one end side thereof to the drive shaft in the other adjacent rotation indexing unit, but a connection position thereof is naturally at a further outer side (an opposite side to the drive member side) than the support position on the one end side. Accordingly, in the one rotation indexing unit, a distance from the drive member to the connection position on the one end side is inevitably large. As a result, in the multiple rotation indexing device of the related art, there is a problem in that the interval between the two rotation indexing units became large, which increases the size of the entire device.

### SUMMARY

In view of the above situations, the present invention is to provide a configuration of a double rotation indexing device especially including two sets of rotation indexing units among the multiple rotation indexing devices as described above, where the interval between the two sets of rotation indexing units is reduced in the axis line direction of the drive shaft, making it possible to miniaturize the entire device.

A preamble of the present invention is a double rotation indexing device including two sets of rotation indexing units in which each of the rotation indexing units includes a main shaft rotatably supported in a frame and having one end side to which a rotation target member is attached and a drive transmission mechanism configured to transmit rotation of an output shaft of a drive motor to the main shaft, the drive transmission mechanism includes a drive shaft that is rotationally driven by the drive motor, a disk-shaped driven member attached to the main shaft, and a drive member provided on the drive shaft and having a spiral groove formed to engage directly or indirectly with the driven member, the drive shaft is supported on one end side by the frame via a bearing holder having a built-in thrust bearing and is supported on the other end side by the frame via a radial bearing, the drive shafts of both the rotation indexing units are connected by a connecting member, and the drive motor is connected to an end portion, on an opposite side to the connecting member side, of the drive shaft of one rotation indexing unit.

In addition, the present invention is characterized in that the double rotation indexing device is configured so that the other end of the drive shaft in one rotation indexing unit is connected to the other end of the drive shaft in the other rotation indexing unit.

According to the present invention, in the double rotation indexing device having the above-described preamble, the double rotation indexing device is configured so that the other end of the drive shaft in one rotation indexing unit is connected to the other end of the drive shaft in the other rotation indexing unit. As a result, each rotation indexing unit is arranged in the device in a state in which one end side of the drive shaft supported by the thrust bearing is at an outer side in the axis line direction with respect to the connection position where both the drive shafts are connected. Therefore, in the configuration, the bearing holder provided to support the drive shaft in each rotation indexing unit is provided at the outer side with respect to each drive member, that is, is present on an opposite side to the connection position side with respect to the drive member. The connection between the two rotation indexing units is made between the radial bearings supporting the other end sides of the respective drive shafts.

Note that since the radial bearing has a smaller outer diameter than that of the thrust bearing and does not require a bearing holder when providing the radial bearing, as in a thrust bearing, a position thereof on the drive shaft can be made close to the drive member. Thereby, compared to the configuration of the related art as described above, it is possible to bring the connection position closer to both the drive members. Therefore, according to the configuration, the interval between the two rotation indexing units can be reduced in the axis line direction, which can miniaturize the entire device.

### BRIEF DESCRIPTION OF DRAWINGS

FIG. 1 is a top cross-sectional view showing a double rotary indexing device to which the present invention is applied.
FIG. 2 is a cross-sectional view (side cross-sectional view) taken along line A-A in FIG. 1.
FIG. 3 is an enlarged view of a main part of FIG. 1.

### DESCRIPTION OF EMBODIMENTS

Hereinafter, one embodiment (embodiment) of a double rotation indexing device to which the present invention is applied will be described with reference to the drawings.

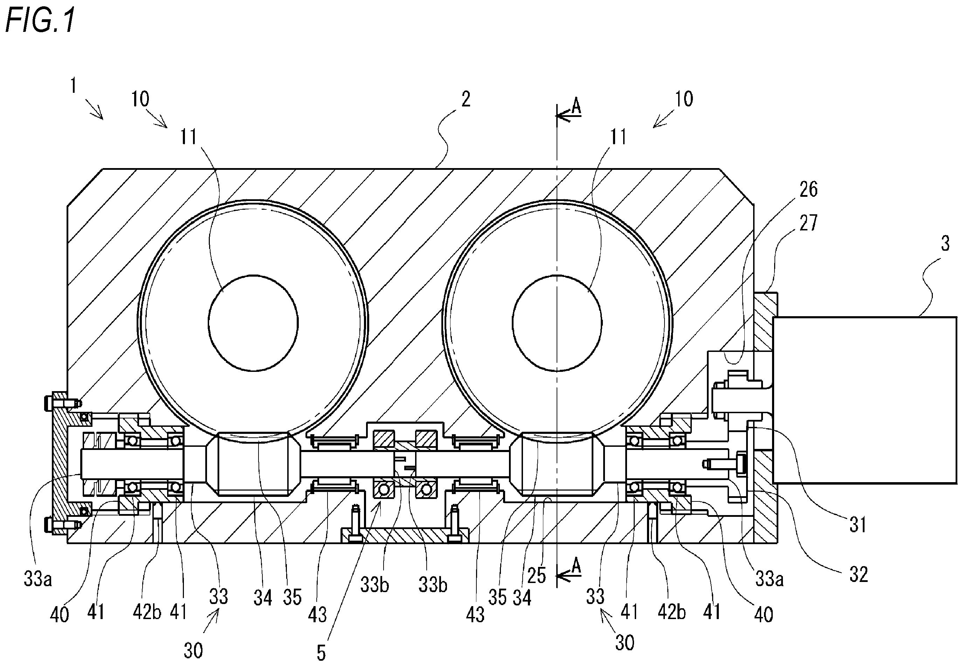

FIGS. 1 to 3 show a double rotation indexing device 1 to which the present invention is applied. Note that the shown double rotation indexing device 1 is a so-called horizontal double rotation indexing device installed with an axis line of a main shaft being directed in a vertical direction. The double rotation indexing device 1 includes a frame 2 that is attached to a machine tool, two sets of rotation indexing units 10 and 10 provided in the frame 2, and a drive motor 3 for rotating each rotation indexing unit 10. Note that the two sets of rotation indexing units 10 and 10 have substantially the same structures. Therefore, in the following description, only one of the two sets of rotation indexing units 10 and 10 will be described, and description of the other rotation indexing unit will be omitted.

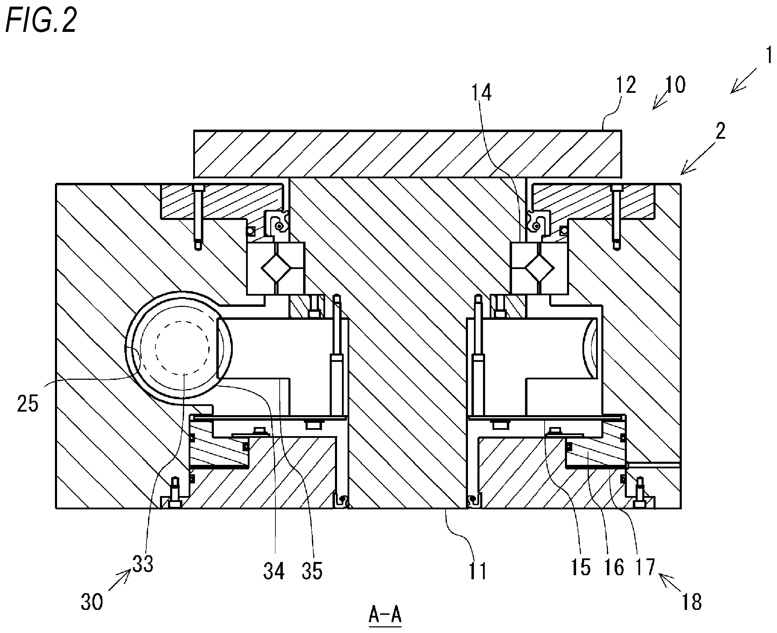

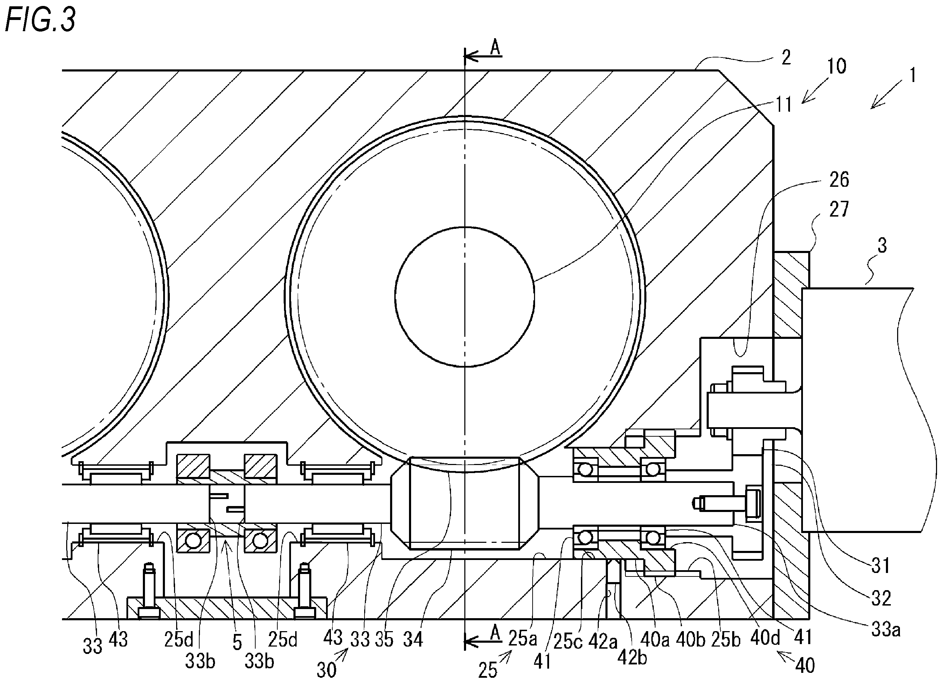

As shown in FIGS. 2 and 3, the rotation indexing unit 10 includes a main shaft 11 rotatably supported with respect to the frame 2 in a space within the frame 2, and a table 12 as a rotation target member attached to one end side of the main shaft 11. In addition, the rotation indexing unit 10 includes a drive transmission mechanism 30 for transmitting rotation of an output shaft of a drive motor 3 to the main shaft 11, and a clamp device 18 for holding (clamping) the main shaft 11 at an indexed angular position.

More specifically, the main shaft 11 is rotatably supported with respect to the frame 2 by a bearing 14 in a state in which an axis line thereof is directed in the vertical direction in the space within the frame 2. In addition, the table 12 is a disk-shaped member for attaching a workpiece to be processed, or the like, and is attached to the main shaft 11 so as not to be relatively rotatable by a plurality of attachment bolts (not shown) in a state in which an end face thereof is in contact with one end of the main shaft 11.

In addition, as for the drive transmission mechanism 30, the present embodiment is an example in which a so-called worm gear mechanism including a disk-shaped worm wheel and a worm directly engaged with the worm wheel is employed as the drive transmission mechanism 30. As for the worm gear mechanism (drive transmission mechanism) 30, more specifically, the worm gear mechanism 30 includes a drive shaft 33 that is rotationally driven by the drive motor 3, a worm wheel 35 as a disk-shaped driven member attached to the main shaft 11, and a worm 34 as a drive member provided on the drive shaft 33.

The worm wheel 35 is attached in the space of the frame 2 so that it cannot rotate relative to the main shaft 11. Note that the worm wheel 35 is composed of a shaft-shaped shaft portion attached to the main shaft 11 and a flange portion that is a flange-shaped portion formed to protrude in a radial direction from the shaft portion and has inclined teeth formed on an outer peripheral surface. The worm wheel 35 is provided so that the flange portion is located at approximately a center of the main shaft 11 in an axis line direction of the main shaft 11.

In addition, the drive shaft 33 is provided in the frame 2 in such a form that the axis line is directed in a horizontal direction (a direction orthogonal to the axis line of the main shaft 11). Therefore, the frame 2 is provided with an accommodation hole 25 that is a hole for accommodating the drive shaft 33, communicates with the space and is formed to penetrate the frame 2 in the horizontal direction. Note that the accommodation hole 25 is formed as a hole having a hole diameter larger than a thickness dimension of the flange portion of the worm wheel 35. In addition, the accommodation hole 25 is formed at a position including a presence range of the flange portion with respect to the axis line direction of the main shaft 11. The drive shaft 33 is rotatably supported with respect to the frame 2 via a bearing in the accommodation hole 25.

In addition, the worm 34 is provided on the drive shaft 33 supported in the accommodation hole 25 in this way. Note that the worm 34 is provided at approximately a center of the drive shaft 33. For reference, as is well known, the worm 34 is a gear with spiral teeth formed on an outer periphery, and has a spiral groove formed by the teeth on the outer periphery. The worm 34, in a state provided on the drive shaft 33 as such, is meshed in the groove with the inclined teeth of the flange portion of the worm wheel 35.

For reference, in the present embodiment, the worm 34 is a so-called double-lead type worm in which leads are slightly different on left and right sides of a tooth surface and a tooth thickness dimension gradually increases toward one side, in the axis line direction, of the drive shaft 33. As is well known, the worm gear mechanism 30 including such a double-lead type worm 34 adjusts backlash between the worm 34 and the flange portion of the worm wheel 35 by displacing the worm 34 in the axis line direction of the drive shaft 33.

In the double rotation indexing device 1 in which the rotation indexing unit 10 has the above-described configuration, the two sets of rotation indexing units 10 and 10 are provided in the frame 2 in such an arrangement that shaft centers of both the drive shafts 33 and 33 coincide with each other when viewed in the axis line direction and are aligned in the axis line direction. In addition, an end portion of the drive shaft 33 in one rotation indexing unit 10 and an end portion of the drive shaft 33 in the other rotation indexing unit 10 are connected by a coupling 5 as a connecting member.

The connected drive shafts 33 and 33 are connected to the drive motor 3 for driving the drive shafts 33 and 33. More specifically, the frame 2 is formed with a hole 26 for receiving the output shaft of the drive motor 3, the hole being a bottomed hole opening to one of two both sides where the accommodation hole 25 is opened. Note that the hole 26 is located above the accommodation hole 25 when viewed in the axis line direction of the drive shaft 33 and is formed so that a portion thereof overlaps the accommodation hole 25. In addition, a plate-shaped motor bracket 27 is attached to the one side of the frame 2 in a form of closing the opening of the accommodation hole 25 and the opening of the hole 26. Note that a through hole is drilled in the motor bracket 27 at a position communicating with the hole 26.

In addition, the drive motor 3 is attached to the motor bracket 27 in such a form that the output shaft is received in the hole 26 through the through hole of the motor bracket 27. In addition, a pinion gear 31 is attached to the output shaft of the drive motor 3. On the other hand, a driven gear 32 that is in mesh with the pinion gear 31 is attached to the drive shaft 33 on the drive motor 3 side of both the drive shafts 33 and 33 connected as described above at an end portion on an opposite side (drive motor 3 side) to the coupling 5 (connecting member) side. Thereby, both the drive shafts 33 and 33 are connected to the drive motor 3 via the driven gear 32 and the pinion gear 31 at the end portion, on the opposite side to the connecting member side, of the drive shaft 33 in the one (drive motor 3-side) rotation indexing unit 10.

As described above, each rotation indexing unit 10 is provided with the clamp device 18 for holding the main shaft 11 at an angular position indexed as a result of both the drive shafts 33 and 33 being rotated by the connected drive motor 3. Note that the clamp device 18, in the example shown, is a so-called disk-type clamp device. Specifically, the clamp device 18 includes a clamp disk 15 attached to the main shaft 11 side, and a clamp piston 16 that presses the clamp disk 15 toward a clamp surface provided on the frame 2. When a working fluid is supplied to a pressure chamber 17 demarcated by the clamp piston 16 and the frame 2, the pressure of the working fluid causes the clamp piston 17 and the clamp surface to sandwich the clamp disk 15, so that the main shaft 11 is held (clamped state).

In the double rotation indexing device 1 as described above, in the present invention, the drive shaft 33 of each rotation indexing unit 10 is supported by the frame 2 via a thrust bearing on one end side thereof, and is supported by the frame 2 via a radial bearing on the other end side thereof. However, the thrust bearing supporting the drive shaft 33 on one end side is provided in a form of being built in a bearing holder and is attached to the frame 2 via the bearing holder. In addition, in the present invention, the double rotation indexing device 1 is configured so that both the rotation indexing units 10 and 10 are arranged in such a form that the other end of the drive shaft 33 in one rotation indexing unit 10 is connected to the other end of the drive shaft 33 in the other rotation indexing unit 10. One embodiment (embodiment) of such a double rotation indexing device 1 will be described in detail below.

In the double rotation indexing device 1, each rotation indexing unit 10 is configured such that the drive shaft 33 is supported by the frame 2 via a thrust bearing 41 on one end 33a side and is supported by the frame 2 via a radial bearing 43 on the other end 33b side, as described above. Note that in the present embodiment, the thrust bearing 41 is an angular ball bearing and the radial bearing 43 is a roller bearing.

In addition, in the double rotation indexing device 1, as described above, both the rotation indexing units 10 and 10 are provided in such a form that an end portion on the other end 33b side of the drive shaft 33 in one rotation indexing unit 10 is connected to an end portion on the other end 33b side of the drive shaft 33 in the other rotation indexing unit 10. Therefore, one (right, in FIG. 1) rotation indexing unit 10 is configured so that one end 33a side of the drive shaft 33 becomes the one side (drive motor 3 side) of both sides where the accommodation hole 25 in the frame 2 is opened, and the other (left, in FIG. 1) rotation indexing unit 10 is configured so that one end 33a side of the drive shaft 33 becomes the other side (opposite side to the drive motor 3 side) of both the sides.

Therefore, in each rotation indexing unit 10, a position where the angular ball bearing 41 supporting an end portion on the one end 33a side of the drive shaft 33 is provided is each corresponding end portion of the accommodation hole 25 of the frame 2. In addition, at the end portion of the accommodation hole 25, the angular ball bearing 41 supporting the drive shaft 33 is built into a bearing holder 40 and is attached to the frame 2 via the bearing holder 40. That is, each drive shaft 33 is, on the one end 33a side, supported by the frame 2 at the end portion of the accommodation hole 25 via the bearing holder 40 having the built-in angular ball bearing 41.

Each bearing holder 40 is a hollow cylindrical member having a through hole 40d in a center where the angular ball bearing 41 is built. In addition, the bearing holder 40 is formed so that an outer diameter of a portion on one end side in the axis line direction is larger than outer diameters of other portions. That is, the bearing holder 40 is configured by a large-diameter portion 40b on one end side and a main body portion 40a excluding the large-diameter portion 40b.

In contrast, the accommodation hole 25 is formed at both ends to have diameter-enlarged portions 25b having a hole diameter enlarged compared to other portions. In addition, in the accommodation hole 25, a portion (communication portion) 25c that is provided between a portion (accommodation portion) 25a where the worm 34 is accommodated and the diameter-enlarged portion 25b and communicates therebetween is required to have a hole diameter equal to or larger than an outer diameter of the worm 34 so that the worm 34 can be inserted from the outside toward the accommodation portion 25a, and in the shown example, the hole diameter is the same as the hole diameter of the accommodation portion 25a.

In addition, the large-diameter portion 40b in the bearing holder 40 is formed so that an outer diameter is substantially the same as the hole diameter of the diameter-enlarged portion 25b in the accommodation hole 25. In addition, the main body portion 40a is formed so that an outer diameter is substantially the same as the hole diameter of the communication portion 25c in the accommodation hole 25. Each bearing holder 40 is provided in such a form that the main body portion 40a is fitted and inserted into the communication portion 25c at the corresponding end portion of the accommodation hole 25 in a direction in which the large-diameter portion 40b side becomes an opening side (outer side) of the accommodation hole 25.

Note that a female screw is formed on an inner peripheral surface of each diameter-enlarged portion 25b in the accommodation hole 25, and on the other hand, a male screw is formed on an outer peripheral surface of the large-diameter portion 40b in each bearing holder 40. Thereby, each bearing holder 40 is attached to the frame 2 in a form that the male screw of the large-diameter portion 40b is screwed to the female screw of the diameter-enlarged portion 25b of the accommodation hole 25. According to the configuration, the position of the bearing holder 40 with respect to frame 2 can be changed in the axis line direction of the drive shaft 33 by rotating the bearing holder 40 (male screw of the large-diameter portion 40b) with respect to the frame 2 (female screw of the diameter-enlarged portion 25b).

In addition, the frame 2 is formed with female screw holes 42a that are each opened to the communication portion 25c in the accommodation hole 25 and are drilled to penetrate horizontally from a rear side of the frame 2 toward the accommodation hole 25. In addition, a locking screw 42b is screwed into each female screw hole 42a. Then, each locking screw 42b is pressed against the outer peripheral surface of the main body portion 40a of the bearing holder 40 fitted and inserted into the communication portion 25c as described above, thereby fixing the position of each bearing holder 40 with respect to the frame 2.

Note that the angular ball bearing 41 is built into each bearing holder 40 attached to the frame 2, as described above. In the shown example, two angular ball bearings 41 are provided in the through hole 40d. In addition, in each through hole 40d, both the angular ball bearings 41 and 41 are provided at an interval in a direction in which both the angular ball bearings face each other.

In addition, as for the roller bearing 43 used for support on the other end 33b side of the drive shaft 33, the roller bearing 43 is a bearing specialized for receiving a load in the radial direction. For this reason, the roller bearing 43 is provided on the other end 33b side in a state where it is directly fitted into the accommodation hole 25 and displacement in the axis line direction is allowed.

Note that, as described above, the bearing holder 40 having the built-in angular ball bearing 41 supporting one end 33a side of the drive shaft 33 is provided in a state in which it can be displaced in the axis line direction of the drive shaft 33 with respect to the frame 2. In addition, the roller bearing 43 supporting the other end 33b side of the drive shaft 33 is provided in a state in which displacement in the axis line direction is allowed. Thereby, in the worm gear mechanism 30 employing the above-described double-lead type worm 34, when the bearing holder 40 is displaced in the axis line direction of the drive shaft 33 with respect to the frame 2, the worm 34 is displaced in the axis line direction of the drive shaft 33 with respect to the worm wheel 35, making it possible to adjust the backlash.

In addition, as described above, the worm 34 accommodated in the accommodation hole 25 (accommodation portion 25a) is provided to mesh with the worm wheel 35 provided in the space of frame 2, and the accommodation hole 25 is formed to communicate with the space in the accommodation portion 25a. In addition, the communication is achieved by forming the accommodation portion 25a with an opening along the axis line direction of the drive shaft 33. Thereby, in the accommodation hole 25, a part of the accommodation portion 25a overlaps a part of the space along the axis line direction of the drive shaft 33, and passes through the opening, so that a part of the disk-shaped worm wheel 35 intrudes into the accommodation portion 25a in the radial direction.

In addition, the roller bearing 43 is provided in such a form that it is directly fitted and inserted into the accommodation hole 25 (fitting portion 25d) as described above at a portion (fitting portion) 25d on an opposite side to the communication portion 25c with respect to the accommodation portion 25a in the accommodation hole 25. However, the outer diameter of the roller bearing 43 is generally smaller than that of the angular ball bearing 41 used for support on one end 33a side of the drive shaft 33 described above. Accordingly, the fitting portion 25d in the accommodation hole 25 is formed to have a smaller hole diameter compared to the accommodation portion 25a and the communication portion 25c.

Note that the fitting portion 25d and the communication portion 25c are portions that are continuous (in communication) with the accommodation portion 25a on both sides of the accommodation portion 25a, as described above. In addition, the fitting portion 25d is formed to have a hole diameter smaller than the hole diameter of the communication portion 25c. For this reason, the fitting portion 25d can be formed at a position closer to the worm 34 than the communication portion 25c, in relation to the worm wheel 35 that intrudes into the accommodation portion 25a as described above.

Therefore, in the rotation indexing unit 10, the fitting portion 25d is formed at a position closer to the worm 34 than the communication portion 25c. Thereby, the position of the roller bearing 43 disposed in the fitting portion 25d, that is, the support position on the other end 33b side of the drive shaft 33 by the roller bearing 43, is closer to the warm 34 compared to the support position on one end 33a side of the drive shaft 33 by the angular ball bearing 41.

In this way, in both the rotation indexing units 10 and 10 of the double rotation indexing device 1, the drive shaft 33 is provided in such a form that the other end 33b side by the roller bearing 43 is supported at a position closer to the warm 34 compared to one end 33a side by the angular ball bearing 41 (bearing holder 40). Along with this, the drive shaft 33 in each rotation indexing unit 10 is formed so that the other end 33b side is shorter than one end 33a side with respect to a distance from the worm 34 on the drive shaft 33 to an end of the shaft.

In addition, as described above, the double rotation indexing device 1 is configured so that the other end 33b side of the drive shaft 33 in one rotation indexing unit 10 is connected to the other end 33b side of the drive shaft 33 in the other rotation indexing unit 10. Therefore, according to the configuration, for example, compared to a double rotation indexing device in which the drive shaft 33 in one rotation indexing unit 10 is connected at one end 33a side to the drive shaft 33 (other end 33b) in the other rotation indexing unit 10, a distance from the position of the worm 34 in the one rotation indexing units 10 to the connection position of both the drive shafts 33 and 33 is shortened.

Note that, in the rotation indexing unit 10, since the position of the worm 34 and the position of the main shaft 11 correspond to each other with respect to the axis line direction of the drive shaft 33, the shortening in distance from the position of the worm 34 in one rotation indexing unit 10 to the connection position of both the drive shafts 33 and 33 as described above reduces an interval between the two main shafts 11 and 11 in the double rotation indexing device 1. Therefore, according to such a configuration, the interval between both the rotation indexing units 10 and 10 can be made as small as possible in the axis line direction of the drive shaft 33, which can miniaturize the entire double rotation indexing device 1.

In the above, one embodiment of the double rotation indexing device of the present invention has been described. However, the double rotation indexing device of the present invention is not limited to the above embodiment and can also be implemented in following modified forms.

(1) As for the drive transmission mechanism, in the above embodiment, the worm gear mechanism 30 including the worm wheel 35 and the worm 34 is adopted as the drive transmission mechanism for transmitting rotation of the output shaft of the drive motor 3 to the main shaft 11. Additionally, in the above embodiment, the double-lead type worm is employed for the worm 34 in the worm gear mechanism 30.

However, in the present invention, even when the worm gear mechanism is employed as the drive transmission mechanism, the worm is not limited to the double-lead type as in the above embodiment, and may also be a so-called single-lead type worm having a tooth thickness dimension constant along the axis line direction of the drive shaft 33. Note that when the worm is of a single-lead type, the backlash between the worm and the worm wheel cannot be adjusted even if the worm is displaced in the axis line direction of the drive shaft 33. Therefore, the double rotation indexing device may not be configured to enable the position of the drive shaft to be adjusted in the axis line direction as in the above embodiment. Therefore, in this case, the bearing holder may be provided so that the position in the axis line direction of the drive shaft cannot be changed. That is, the double rotation indexing device may be configured so that the bearing holder is fixed at a specific position.

In addition, the drive transmission mechanism is not limited to the configuration in which the worm, which is a drive member, is directly engaged with the worm wheel, which is a driven member, in the spiral groove, as in the worm gear mechanism of the above embodiment, and may also be another type of a drive transmission mechanism in which the drive member is indirectly engaged with the driven member in the spiral groove. Specifically, the drive transmission mechanism may also be a so-called ball drive mechanism in which a worm wheel and a worm are connected via a steel ball. In addition, the drive transmission mechanism may also be a so-called roller gear cam mechanism in which a turret wheel having a plurality of roller followers attached to an outer periphery at intervals and a roller gear cam having a spiral cam groove corresponding to rollers of the roller followers are connected. Note that, in the case of the roller gear cam mechanism, the turret wheel corresponds to the driven member, and the roller gear cam corresponds to the drive member.

(2) As for the frame of the double rotation indexing device, in the above embodiment, the double rotation indexing device 1 is configured so that the frame 2 in which the two sets of rotation indexing units 10 and 10 are arranged is an integrally molded member. However, the double rotation indexing device is not limited to the frame being formed as such and may also be configured so that the frame is formed by combining (connecting) two members in which two sets of rotation indexing units are respectively arranged. Note that, in this case, each member for forming the frame is formed with a through hole that becomes an accommodation hole when combined, and one of side surfaces of both members (surfaces where the through hole is opened) is formed as a connecting surface orthogonal to (parallel to the axis line of the main shaft) a penetration direction of the accommodation hole. In addition, the two members are combined in a state in which the connecting surfaces are in contact with each other, forming the frame.

(3) As for the double rotation indexing device, which is the preamble of the present invention, in the above embodiment, the double rotation indexing device 1 is a so-called horizontal double rotation indexing device installed with the axis line of the main shaft being directed in the vertical direction. However, the double rotation indexing device to which the present invention is applied is not limited to such a horizontal double rotation indexing device and may also be a so-called vertical double rotation indexing device installed with the axis line of the main shaft being directed in the horizontal direction. In addition, the double rotation indexing device to which the present invention is applied is not limited to the installation in which the frame is directly attached to the machine tool as described above. For example, the present invention may also be applied to a rotation indexing part of a so-called inclination rotation indexing device having two types of rotation indexing parts, i.e., an inclination indexing part and the rotation indexing part.

### REFERENCE SIGNS LIST

1: double rotation indexing device, 2: frame, 3: drive motor, 5: coupling (connecting member), 10: rotation indexing unit, 11: main shaft, 12: table (rotation target member), 14: bearing, 15: clamp disk, 16: clamp piston, 17: pressure chamber, 18: clamp device, 25: accommodation hole, 25a: accommodation portion, 25b: diameter-enlarged portion, 25c: communication portion, 25d: fitting portion, 26: hole, 27: motor bracket, 30: worm gear mechanism (drive transmission mechanism), 31: pinion gear, 32: driven gear, 33: drive shaft, 33a: one end, 33b: other end, 34: worm (drive member), 35: worm wheel (driven member), 40: bearing holder, 40a: main body portion, 40b: large-diameter portion, 40d: through hole, 41: angular ball bearing (thrust bearing), 42a: female screw hole, 42b: locking screw, 43: roller bearing (radial bearing)

## Claims

1. A double rotation indexing device (1) including two sets of rotation indexing units (10 and 10),
each of the rotation indexing units comprising:
a main shaft (11) rotatably supported in a frame (2) and having one end side to which a rotation target member (12) is attached; and
a drive transmission mechanism (30) configured to transmit rotation of an output shaft of a drive motor (3) to the main shaft (11),
the drive transmission mechanism (30) including:
a drive shaft (33) configured to being rotationally driven by the drive motor;
a disk-shaped driven member (35) attached to the main shaft; and
a drive member (34) provided on the drive shaft and having a spiral groove formed to engage directly or indirectly with the driven member(35),
the drive shaft (33) being supported on one end (33a) side by the frame via a bearing holder (40) having a built-in thrust bearing (41) and being supported on the other end (33b) side by the frame via a radial bearing (43),
the drive shafts of both rotation indexing units being connected by a connecting member (5), and
the drive motor (3) being connected to an end portion, on an opposite side to the connecting member side, of the drive shaft (33) of one rotation indexing unit (10),
**characterized in that**
the other end (33b) of the drive shaft (33) in one rotation indexing unit (10) is connected to the other end (33b) of the drive shaft (33) in the other rotation indexing unit (10).

## Patentansprüche

1. Doppelrotationsindexierungsvorrichtung (1), die zwei Sätze von Rotationsindexierungseinheiten (10 und 10) aufweist,
jede der Rotationsindexierungseinheiten umfassend:
eine Hauptwelle (11), die in einem Rahmen (2) rotierbar gestützt ist und eine Endseite vorweist, an der ein Rotationszielelement (12) befestigt ist; und
einen Antriebsübertragungsmechanismus (30), der konfiguriert ist zum Übertragen einer Rotation einer Ausgangswelle eines Antriebsmotors (3) an die Hauptwelle (11),
wobei der Antriebsübertragungsmechanismus (30) aufweist:
eine Antriebswelle (33), die konfiguriert ist zum rotierenden Angetriebenwerden durch den Antriebsmotor;
ein scheibenförmiges angetriebenes Element (35), das an der Hauptwelle befestigt ist; und
ein Antriebselement (34), das auf der Antriebswelle bereitgestellt ist und eine Spiralnut vorweist, die ausgebildet ist zum direkten oder indirekten Ineingriffnehmen mit dem angetriebenen Element (35),
wobei die Antriebswelle (33) an einer Seite eines Endes (33a) durch den Rahmen über einen Lagerhalter (40) gestützt ist, der ein eingebautes Gegenlager (41) vorweist, und an der anderen Seite des Endes (33b) durch den Rahmen über ein Radiallager (43) gestützt ist,
die Antriebswellen beider Rotationsindexierungseinheiten durch ein Verbindungselement (5) verbunden sind, und
der Antriebsmotor (3) mit einem Endabschnitt, auf einer gegenüberliegenden Seite der Verbindungselementseite, der Antriebswelle (33) einer Rotationsindexierungseinheit (10) verbunden ist,
**dadurch gekennzeichnet, dass**
das andere Ende (33b) der Antriebswelle (33) in einer Rotationsindexierungseinheit (10) mit dem anderen Ende (33b) der Antriebswelle (33) in der anderen Rotationsindexierungseinheit (10) verbunden ist.

## Revendications

1. Dispositif d'indexage de rotation double (1) incluant deux ensembles d'unités d'indexage de rotation (10 et 10),
chacune des unités d'indexage de rotation comprenant:
un arbre principal (11) supporté en rotation dans un châssis (2) et ayant un côté d'extrémité auquel est fixé un élément cible de rotation (12); et
un mécanisme de transmission d'entraînement (30) configuré pour transmettre la rotation d'un arbre de sortie d'un moteur d'entraînement (3) à l'arbre principal (11),
le mécanisme de transmission d'entraînement (30) incluant :
un arbre d'entraînement (33) configuré pour être entraîné en rotation par le moteur d'entraînement;
un élément entraîné en forme de disque (35) fixé à l'arbre principal; et
un élément d'entraînement (34) disposé sur l'arbre d'entraînement et ayant une rainure en spirale formée pour s'engager directement ou indirectement avec l'élément entraîné (35),
l'arbre d'entraînement (33) étant supporté sur le côté d'une extrémité (33a) par le châssis par l'intermédiaire d'un porte-palier (40) ayant un palier de butée intégré (41) et étant supporté sur le côté de l'autre extrémité (33b) par le châssis par l'intermédiaire d'un palier radial (43),
les arbres d'entraînement des deux unités d'indexage de rotation étant reliés par un élément de liaison (5), et
le moteur d'entraînement (3) étant relié à une partie d'extrémité, sur un côté opposé au côté de l'élément de liaison, de l'arbre d'entraînement (33) d'une unité d'indexage de rotation (10),
**caractérisé en ce que**
l'autre extrémité (33b) de l'arbre d'entraînement (33) dans une unité d'indexage de rotation (10) est reliée à l'autre extrémité (33b) de l'arbre d'entraînement (33) dans l'autre unité d'indexage de rotation (10).
